# EUROPÄISCHE PATENTSCHRIFT

(11) **EP 2 272 318 B1**
(45) Veröffentlichungstag und Bekanntmachung des Hinweises auf die Patenterteilung: **14.11.2012**
(21) Anmeldenummer: 10007021.8
(22) Anmeldetag: 07.07.2010
(51) Int. Cl.: A01D 75/08, A01F 29/09

(54) **Erntemaschine**
Harvester
Moissonneuse

(30) Priorität: 08.07.2009 DE 102009032261
(43) Veröffentlichungstag der Anmeldung: 12.01.2011
(73) Patentinhaber: Alois Pöttinger Maschinenfabrik Ges.m.b.H., 4710 Grieskirchen (AT)
(72) Erfinder: Kleesadl, Johann, 4181 Oberneukirchen (DE)
(74) Vertreter: Thoma, Michael

(56) Entgegenhaltungen:
- DE-A1- 3 520 273
- DE-C1- 3 512 979
- DE-U1-202004 004 133

## Beschreibung

Die vorliegende Erfindung betrifft eine Erntemaschine, insbesondere in Form eines Ladewagens und/oder einer Ballenpresse, mit einer Aufnahmevorrichtung zum Aufnehmen von Erntegut vom Boden, einem an die Aufnahmevorrichtung anschließenden Förderkanal, der in einen Erntegutspeicher und/oder eine Verarbeitungskammer, beispielsweise Pressenkammer, führt, einer Schneideinrichtung mit mehreren Messern zum Zerschneiden des von einem Förderer durch den Förderkanal geförderten Ernteguts, sowie einer Schleifvorrichtung zum Schleifen der Messer, die zumindest einen Schleifer, eine Schleiferführung sowie einen Stellantrieb für den Schleifer umfasst, mittels dessen der Schleifer über die Schneide eines jeweiligen Messers sowie von Messer zu Messer bewegbar ist, wobei die Schleiferführung eine Quertraverse umfasst, an der ein Querschlitten quer zur Schnittrichtung der Messer verfahrbar angeordnet ist, an dem der Schleifer in Längsrichtung verfahrbar angeordnet ist.

Bei Ladewagen und Ballenpressen müssen die Messer, mittels derer das aufgenommene Erntegut zerschnitten wird, regelmäßig nachgeschliffen werden, um einerseits das Erntegut schonend zu zerschneiden, andererseits zu hohe Schnittkräfte und ein Verstopfen des Förderkanals zu vermeiden. Üblicherweise müssen die Messer dabei mehrmals täglich nachgeschliffen werden. Um einen Ein- und Ausbau und damit entsprechende Stillstandszeiten zu vermeiden, wurden bereits am Ladewagen arbeitende Schleifvorrichtungen vorgeschlagen, so z.B. in der DE 35 20 273 A1 oder der DE 33 23 116. Dabei werden üblicherweise die Messer auf einem schwenkbaren Messerbalken angeordnet, so dass sie aus dem Förderkanal heraus in eine Schleifposition geschwenkt werden können. Ein mit einer rotierenden Schleifscheibe versehener Schleifer ist dabei an einem Schwenkarm pendelnd aufgehängt, so dass durch eine Pendelbewegung des Schwenkarms die Schleifscheibe über die üblicherweise bogenförmig gerundete Schneide eines Messers fahrbar ist. Um den Schleifer von Messer zu Messer fahren zu können, ist der genannte Schwenkarm, der den Schleifer trägt, an einer Quertraverse quer zur Schnittrichtung der Messer verschieblich gelagert.

Eine in ähnlicher Weise arbeitende Schleifvorrichtung für einen Ladewagen ist aus der DE 20 2004 004 133 U1 bekannt. Dabei wurde auch bereits vorgeschlagen, mit mehreren Schleifern gleichzeitig zu arbeiten, um mehrere Messer gleichzeitig zu schärfen, vgl. DE 10 2004 037 212.

Um die Messer auch während des Ladebetriebs schleifen zu können, wurde in der EP 18 82 407 vorgeschlagen, die Messer rotatorisch zu lagern, über den Umfang versetzt mit mehreren Schneiden zu versehen und das Messer nach Art eines Revolvermagazins weiter zu schalten, so dass eine der Schneiden im Förderkanal arbeitet, während eine weitere Schneide außerhalb des Förderkanals zu liegen kommt, so dass sie dort geschliffen werden kann.

Um ein Schleifen nur dann in Gang zu setzen, wenn die Schneide eines Messers dies tatsächlich benötigt, ist in der DE 20 2004 004 133 vorgeschlagen, die Messerschärfe zu erfassen und den Schleifvorgang nur in Abhängigkeit des erfassten Schärfezustandes zu starten, wobei ggf. auch nur selektiv einzelne Messer eines Messerbalkens geschliffen werden, um die Schleifzeiten zu verkürzen und noch scharfe Messer nicht unnötig herunterzuschleifen.

Ein solches Messerschleifen unmittelbar am Ladewagen ist jedoch mit verschiedenen Schwierigkeiten behaftet, die in ihrer Summe bislang noch nicht optimal gelöst sind. Einerseits ist es nicht einfach, beim Schleifvorgang über die gesamte Länge der Schneide gleichmäßig denselben Anpressdruck der Schleifscheibe gegen die Schneide zu erreichen. Dies liegt einerseits daran, dass die Schneide bei Beschädigungen beispielsweise durch Steine auch Querverformungen zeigen können, so dass die von der Schleiferführung vorgegebene Bewegungsbahn der Schleifscheibe nicht exakt mit dem Verlauf der Schneide fluchtet. Zum anderen muss bei nur schwach gekrümmten Schneiden der genannte Schwenkarm, an dem der Schleifer pendelnd aufgehängt ist, entsprechend lang ausgebildet sein, um der schwach gekrümmten Schneide folgen zu können. Hierdurch treten ungünstige Hebelverhältnisse an dem Schwenkarm auf, d.h. die Anpresskraft, die am freien Ende des Schwenkarms in diesen eingeleitet wird, erzeugt aufgrund der Länge des Schwenkarms in diesem hohe Biegemomente, die zu einem seitlichen Wegbiegen oder einem Verkanten des Schleifarms führen können. Zum anderen wird für die Schleiferaufhängung recht viel Bauraum benötigt, der unter einem Ladewagen gerade in vertikaler Richtung nicht vorhanden ist.

Hiervon ausgehend liegt der vorliegenden Erfindung die Aufgabe zugrunde, eine verbesserte Erntemaschine der genannten Art zu schaffen, die Nachteile des Standes der Technik vermeidet und Letzteren in vorteilhafter Weise weiterbildet. Insbesondere soll mit einer kompakten, klein bauenden Schleifvorrichtung ein effizienteres Schleifen mit einer gleichmäßigen, hohen Schärfe entlang der gesamten Schneide der Messer erreicht werden, ohne die Steuerbarkeit des Schleifvorgangs zu kompliziert zu machen.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, die von der Kontur der Messerschneide abhängige, erforderliche Kinematik der Schleiferbewegung durch mehrere jeweils verschieblich gelagerte Schlitten zu realisieren und dabei die Verschieblichkeit der Schlitten zur Erzeugung einer gleichmäßigen Andrückkraft des Schleifers gegen die zu schleifenden Schneide zu nutzen. Erfindungsgemäß ist der Schleifer an einem Längsschlitten befestigt, der in Längsrichtung parallel zur Schneide der Messer an dem eingangs genannten Querschlitten in einer Längsführung verschieblich geführt ist, wobei eine Andrückvorrichtung zum Andrücken des Schleifers beim Schleifen gegen ein zu schleifendes Messer quer zur Schnittrichtung vorgesehen ist. Durch die Verwendung eines verschieblich geführten Längsschlittens kann einerseits die Kinematik der Schleiferbewegung an verschiedene Schneidenverläufe, auch wenn diese nicht bogenförmig sind, einfacher angepasst werden und dem jeweiligen Schneidenverlauf präzise folgen. Dabei können auch bei nur schwach gekrümmten Schneidenverläufen eine klein bauende Anordnung mit geringem Platzbedarf in vertikaler Richtung sowie eine direkte Krafteinleitung ohne große Hebelarme erreicht werden, da auf entsprechend lang ausgebildete Pendelarme zur Aufhängung des Schleifers verzichtet werden kann. Zum anderen kann durch die Andrückvorrichtung, die quer zur Schnittrichtung der Messer arbeitet, ein gleichmäßiges Andrücken des Schleifers gegen die zu schärfende Schneide über deren gesamte Länge erzielt werden, und zwar insbesondere auch dann, wenn die Schneide Verformungen quer zur Schnittrichtung aufweist bzw. die Schneidenlängsrichtung Fluchtungsfehler aufweist.

Die Andrückvorrichtung kann hierbei in verschiedener Art und Weise arbeiten bzw. ausgebildet sein. Vorteilhafterweise ist die Andrückvorrichtung elastisch arbeitend ausgebildet, so dass der Schleifer in Querrichtung über einen gewissen Anstellbereich hinweg mit einer konstanten Kraft gegen die Schneide drückbar ist. Hierdurch kann der Schleifer beim Entlangfahren an der Schneide Fluchtungsfehler bzw. Querverformungen der Schneide, beispielsweise durch Steine verursacht, sozusagen "schlucken", ohne dass die Schleif-Andrückkraft eine substantielle Veränderung erfahren würde. Der Schleifer kann mit einer gleichmäßigen Andrückkraft über die gesamte Länge der Schneide gefahren werden, wodurch ein gleichmäßiges Schärfen erreicht wird. Die Andruckvorrichtung umfasst hierzu eine Spann- bzw. Vorspannvorrichtung, die den Schleifer mit einer Spannkraft in Querrichtung gegen das jeweilige Messer drückt.

Die genannte Spannvorrichtung könnte hierbei prinzipiell an verschiedenen Punkten ansetzen, beispielsweise den Schleifer gegenüber dem Längsschlitten in Querrichtung vorspannen. Hierzu kann der Schleifer auf dem genannten Längsschlitten beweglich gelagert sein, beispielsweise quer verschieblich geführt sein. Vorteilhafterweise jedoch wird die Andrückkraft über den Querschlitten aufgebracht, d.h. der Querschlitten wird mitsamt dem darauf gelagerten Längsschlitten und dem an diesem befestigten Schleifer in Querrichtung gegen das zu schleifende Messer gedrückt. Hierdurch kann in einfacher Weise die an sich bereits gegebene Querverfahrbarkeit des Querschlittens zum Erzielen der Andrückkraft genutzt werden, so dass der Querschlitten eine Doppelfunktion erhält. Einerseits kann über den Querschlitten der Schleifer von Messer zu Messer gefahren werden. Andererseits kann der Schleifer beim Schleifen eines Messers elastisch gegen das Messer gespannt werden.

In vorteilhafter Weiterbildung der Erfindung kann die Andrückkraft in Abhängigkeit verschiedener Betriebsparameter der Schleifvorrichtung und/oder der Schneidvorrichtung variiert werden. Insbesondere kann die Andrückvorrichtung während des Anfahrens eines Messers sozusagen deaktiviert werden. Erst wenn der Schleifer mit seinem Schleifwerkzeug, insbesondere in Form einer Schleifscheibe, zwischen zwei Messer gefahren ist und der Längsschlitten den Anfangspunkt der Schleifbahn erreicht hat, aktiviert eine Steuervorrichtung die Andrückvorrichtung, um das Schleifwerkzeug mit der gewünschten Andrückkraft gegen das Messer zu spannen. Dies erleichtert einerseits das Anfahren der Schleifposition, andererseits kann ein sanftes Starten und Beenden des Schleifvorgangs erreicht werden.

Eine Steuerung der Andrückkraft in Abhängigkeit der Verfahrstellung des Längsschlittens kann auch in anderer Weise variiert werden, beispielsweise kann in einem stärker abgenutzten Abschnitt der Schneide ein höherer Anpressdruck erzeugt werden als in weniger abgenutzten Bereichen. Sind beispielsweise die freien Enden der Messer stärker beansprucht und abgenutzt, kann die Andrückkraft in einem Abschnitt des Verfahrwegs des Längsschlittens, der den stärker abgenutzten Enden der Schneiden entspricht, erhöht werden, während in den restlichen Abschnitten des Verfahrwegs des Längsschlittens die Andrückkraft reduziert wird.

Alternativ oder zusätzlich kann die Andrückkraft auch mit der Schleifwerkzeuggeschwindigkeit variiert werden. Wird beispielsweise eine Schleifscheibe verwendet, kann die Andrückkraft in Abhängigkeit der Schleiferdrehzahl gesteuert sein, beispielsweise dergestalt, dass mit zunehmender Schleiferdrehzahl eine höhere Andrückkraft eingestellt wird.

Alternativ oder zusätzlich kann die Andrückkraft auch mit dem Schleiferdrehmoment und/oder mit einem die Schleifeinheit beaufschlagenden Hydraulikdruck variiert werden. Die Berücksichtigung weiterer Betriebsparameter des Schleifers für die Steuerung der Andrückkraft kann in Weiterbildung der Erfindung vorgesehen sein.

Alternativ oder zusätzlich kann die Andrückkraft auch in Abhängigkeit eines Betriebsparameters der Schneidvorrichtung gesteuert sein, beispielsweise kann die Andrückkraft eine Temperatur der Messer berücksichtigen. Insbesondere kann die Andrückkraft in Abhängigkeit einer zuvor erfassten Schärfe bzw. Unschärfe der Messer gesteuert werden. Wird beispielsweise mittels einer geeigneten Schärfebestimmungseinrichtung, die beispielsweise einen optischen Sensor zur optischen Erfassung der Messerschärfe umfassen kann, eine starke Abnutzung der Messer bestimmt, kann die Steuervorrichtung die Andrückkraft erhöhen, um die Messer stärker zu schleifen. Wird hingegen festgestellt, dass die Messer nur wenig abgenützt und noch relativ scharf sind, kann die Andrückkraft reduziert werden.

Die Andrückvorrichtung kann hierbei die Andrückkraft in verschiedener Art und Weise erzeugen. Nach einer vorteilhaften Ausführung der Erfindung umfasst die Andrückvorrichtung einen druckmittelbetätigten Aktor, insbesondere einen hydraulischen Stellantrieb beispielsweise in Form eines Hydromotors, mittels dessen die Andrückkraft erzeugbar ist. Durch einen Druckmittelantrieb kann die Andrückkraft in einfacher Weise variiert und gesteuert werden, indem beispielsweise der Hydraulikdruck erhöht bzw. erniedrigt wird. Überdies ist in der gewünschten Weise eine Elastizität der Andrückvorrichtung realisierbar.

Als druckmittelbetätigbarer Aktor kann beispielsweise ein Hydraulikzylinder vorgesehen sein. Vorteilhafterweise kann jedoch ein Hydraulikmotor Verwendung finden, der über ein Getriebe, beispielsweise in Form eines Ritzels, das eine Zahnstange kämmt, das erzeugte Drehmoment in eine entsprechende Stellbewegung quer zur Messerschneidrichtung umsetzt. Ein solcher Hydraulikmotor mit Stellgetriebe erlaubt ein besonders feinfühliges Einstellen der gewünschten Andrückkraft. Anstelle einer Zahnstange kann vorteilhafterweise auch ein umlaufender Ketten- oder Riementrieb eingesetzt werden.

Alternativ oder zusätzlich kann die Andrückvorrichtung auch elektrisch arbeitend ausgebildet sein, beispielsweise einen Elektromotor umfassen, der über ein Getriebe, beispielsweise umfassend ein Ritzel, das mit einer Zahnstange kämmt, aus der motorischen Drehbewegung eine Andrückkraft in Querrichtung erzeugt. Ein solcher Elektromotor ist in einfacher Weise steuerbar und erlaubt ein präzises Einstellen der gewünschten Stellkraft.

In vorteilhafter Weiterbildung der Erfindung wird hierbei der Aktor der Andrückvorrichtung von dem Aktor des Stellantriebs für den Querschlitten gebildet, so dass Letzterer eine Doppelfunktion erfüllt. Einerseits wird über den Stellantrieb des Querschlittens dieser von Messer zu Messer verfahren. Andererseits wird über den Stellantrieb dann, wenn durch Verfahren des Längsschlittens der Schleifer entlang der Schneide geführt wird, das Schleifwerkzeug gegen das Messer gedrückt.

Alternativ oder zusätzlich zu einer solchen Erzeugung der Andrückkraft mittels des Querschlittenantriebs kann die Andrückvorrichtung auch einen mechanisch ausgebildeten Aktor, insbesondere einen mechanischen Spanner umfassen, mittels dessen das Schleifwerkzeug mit der gewünschten Andrückkraft gegen die Schneide gedrückt wird. Beispielsweise kann der Querschlittenantrieb in eine feste Stellung gefahren werden, in den die Querkraft zum Andrücken des Schleifwerkzeugs über eine Federeinrichtung aufgebracht wird. Alternativ oder zusätzlich kann die genannte mechanische Spannvorrichtung eine Klinke umfassen, die mit einer Federeinrichtung zusammenwirkt. Ist die gewünschte Querstellung des Querschlittens angefahren und das Schleifwerkzeug mittels des Längsschlittens an das zu schleifende Werkzeug gefahren, kann die Klinke gelöst werden, so dass die Federeinrichtung das Schleifwerkzeug gegen die Schneide drückt.

Um mit einer insgesamt kompakt bauenden Vorrichtung den Schleifer ohne lange Verfahrwege des Längsschlittens einfach an die zu schleifenden Messer fahren zu können, ist in Weiterbildung der Erfindung die Quertraverse, an der der Querschlitten quer verfahrbar gelagert ist, in einer aufrechten Ebene beweglich gelagert derart, dass die Quertraverse auf die Messer zu und von diesen weg bewegbar ist. Insbesondere kann die Quertraverse höhenverstellbar ausgebildet sein. Dies ermöglicht es in einfacher Weise auch verschiedene Messergruppen, die in verschiedenen Ebenen bzw. Höhenpositionen bereit gehalten werden, mit derselben Schleifvorrichtung zu schleifen.

Die Quertraverse kann hierbei grundsätzlich in verschiedener Weise beweglich gelagert sein, wobei vorteilhafterweise eine Lenkerführung zur beweglichen Führung der Quertraverse auf die Messer zu und von diesen weg vorgesehen ist. Die Lenkerführung kann hierbei grundsätzlich verschieden ausgebildet sein, um beispielsweise in einer überlagerten Hub- und Schwenkbewegung die Quertraverse bzw. den darauf gelagerten Schleifer in günstiger Weise von oben her auf die zu schleifenden Messer zu schwenken. Nach einer vorteilhaften Weiterbildung der Erfindung kann die genannten Lenkerführung im Wesentlichen nach Art einer Parallelogrammlenkerführung ausgebildet sein, die mindesten ein Paar im Wesentlichen paralleler Lenker, vorzugsweise rechts und links jeweils ein Paar paralleler Lenker aufweist, die die Hubbewegung der Quertraverse steuern.

Um ein ungewolltes Ausweichen der Messer relativ zu der Schleifvorrichtung zu vermeiden bzw. eine exakt definierte Relativstellung zwischen Schleifvorrichtung und Messer zu erreichen, ist in Weiterbildung der Erfindung an der Quertraverse eine vorzugsweise kammartige Positioniervorrichtung zur Positionierung und/oder Fixierung der Quertraverse relativ zu den Messern und/oder umgekehrt, d.h. der Messer relativ zur Quertraverse, vorgesehen. Die genannte Positioniervorrichtung kann hierbei in vorteilhafter Weiterbildung der Erfindung einen Eingriffskamm umfassen, dessen Teilung dem Messerabstand entspricht und der mit den Messer in Eingriff bringbar ist, wenn die Quertraverse mitsamt dem darauf gelagerten Querschlitten und Längsschlitten auf die Messer gefahren wird, um diese zu schleifen. Vorteilhafterweise werden dabei sämtliche Messer einer Messergruppe, die geschliffen werden soll, gleichzeitig festgehalten, so dass nur ein einziger Aufspannvorgang für die Quertraverse notwendig ist.

Die Längsführung des Längsschlitten an dem Querschlitten, über die das Entlangfahren des Schleifwerkzeugs an einer Schneide gesteuert wird, kann grundsätzlich verschieden ausgebildet sein. Nach einer vorteilhaften Ausführung der Erfindung umfasst die Längsführung zumindest zwei voneinander beabstandete Anlenkpunkte, die an einem Paar kulissenartiger Führungskonturen verschieblich geführt sind.

Grundsätzlich wäre es auch denkbar, eine durchgehende kulissenartige Führungskontur vorzusehen, an der die beiden voneinander beabstandeten Anlenkpunkte geführt sind. Um jedoch eine größere Freiheit bezüglich der erzeugbaren Kinematik und eine kurz bauende Anordnung zu erreichen, können vorteilhafterweise in der genannten Weise zwei separate Führungskonturen vorgesehen sein, an denen jeweils einer der Anlenkpunkte geführt ist.

Um Verwindungen bzw. Torsion des Schleifers um eine Achse parallel zur Schneide zu vermeiden, sind in Weiterbildung der Erfindung vier Anlenkpunkte für den Längsschlitten vorgesehen, die paarweise in Querrichtung voneinander beabstandet sind und jeweils an entsprechenden kulissenartigen Führungskonturen verschieblich geführt sind.

In Weiterbildung der Erfindung sind dabei vorteilhafterweise die kulissenartigen Führungskonturen an den Querschlitten vorgesehen, während die Anlenkpunkte, die an diesen Führungskonturen verschieblich geführt sind, ortsfest am Schleifer vorgesehen sind. Grundsätzlich wäre auch eine umgekehrte Anordnung möglich, d.h. es werden die Anlenkpunkte ortsfest am Querschlitten vorgesehen, während die kulissenartigen Führungskonturen am Längsschlitten ausgebildet sind. Bevorzugt ist jedoch die zuvor genannte, umgekehrte Anordnung, die es erlaubt, mit einem identischen Schleifer bzw. Längsschlitten durch Austausch der kulissenartigen Führungskonturen am Querschlitten verschiedene Messergeometrien zu schleifen.

Um eine besonders flach bauende Schlittenanordnung zu erreichen, die in vertikaler Richtung kaum Platz benötigt, ist in vorteilhafter Weiterbildung der Erfindung vorgesehen, dass sich die genannten kulissenartigen Führungskonturen im Wesentlichen in liegender Ausrichtung auf etwa - grob gesprochen - demselben Höhenniveau angeordnet sind, so dass sie im Wesentlichen in Richtung der Schneide der zu schleifenden Messer hintereinander positioniert sind.

Alternativ hierzu kann jedoch auch eine übereinander auf verschiedenen Höhenniveaus liegende Anordnung der kulissenartigen Führungskonturen vorgesehen sein, was insbesondere dann vorteilhaft ist, wenn in Längsrichtung des Ladewagens bzw. der Ballenpresse wenig Raum zur Verfügung steht, um die Messerschleifvorrichtung einzubauen.

Durch variierende Konturen der kulissenartigen Führungskonturen können verschiedene Kinematiken der Schleifwerkzeugbewegung realisiert werden. Um eine bogenförmige Schleifbewegung entsprechend einer bogenförmigen Messerschneide zu realisieren, kann zumindest eine der kulissenartigen Führungskonturen einen bogenförmige konturierten Abschnitt besitzen. Im Gegensatz zu pendelnd aufgehängten Schwenkarmen zur Führung des Schleifwerkzeugs können durch entsprechende Konturierung der kulissenartigen Führungskonturen jedoch auch abschnittsweise unterschiedlich gekrümmte und/oder unterschiedlich geneigte und/oder ggf. auch geknickte Messerschneiden geschliffen werden. In Weiterbildung der Erfindung kann zumindest eine der kulissenartigen Führungskonturen einen bogenförmig gekrümmten Abschnitt besitzen, an den ein verschieden gekrümmter Abschnitt und/oder ein gerader Abschnitt anschließt, so dass über verschiedene Segmente der Messerschneide verschiedene Schleifbahnkinematiken realisiert werden können.

In alternativer Weiterbildung der Erfindung können die kulissenartigen Führungskonturen jedoch auch gerade ausgebildet sein. Ggf. kann auch eine gerade Führungskontur mit einer gekrümmten und/oder geknickten und/oder abschnittsweise unterschiedlich geformten Führungskontur kombiniert sein.

In Weiterbildung der Erfindung ist eine Bestimmungseinrichtung zur Bestimmung fehlender Messer und/oder gebrochener Messer vorgesehen, um dem Maschinenführer ein entsprechendes Anzeigesignal bzw. Warnsignal zu geben und/oder einen entsprechenden Schleifvorgang abzubrechen bzw. gar nicht erst anzufangen und sofort auf das nächste zu schleifende Messer weiter zu fahren, um den Schleifvorgang effizient zu gestalten. Die genannte Bestimmungseinrichtung kann hierbei verschieden ausgebildet sein, beispielsweise eine optische Sensoreinrichtung und/oder eine Abtasteinrichtung zum Abtasten des Messers vor und/oder während eines Schleifvorgangs umfassen.

Nach einer besonders vorteilhaften Ausführung der Erfindung kann die genannte Bestimmungseinrichtung eine Auswerteeinheit zur Auswertung des sich bei einem Schleifvorgang einstellenden Anpressdrucks umfassen. Die genannte Auswerteeinheit überwacht den Anpressdruck, wenn ein Messer in seine Schleifposition gefahren wird und/oder an der Schneide eines Messers entlang gefahren wird. Stellt die Auswerteeinheit untypische Veränderungen der Andrückkraft fest, beispielsweise ein Abweichen von einem Sollfenster für die Andrückkraft und/oder eine sprunghafte Veränderung der Andrückkraft und/oder ein gänzliches Ausbleiben und/oder Unterbrechen der Andrückkraft, wird dies als Zeichen dafür gewertet, dass das Messer abgebrochen ist, einen Ausbruch besitzt und/oder ganz fehlt. Wird die Andrückkraft mittels eines hydraulischen Aktors erzeugt, kann der Hydraulikdruck entsprechend überwacht werden. Wird beispielsweise ein Elektromotor zum Erzeugen der Andrückkraft verwendet, kann die elektrische Leistungsaufnahme überwacht werden.

Um den Schleifvorgang nicht durch am zu schleifenden Messer zurückgebliebene Verschmutzungen wie beispielsweise festklebendes Erdreich zu beeinträchtigen oder zu verfälschen bzw. die genannte Überwachung der Andrückkraft vor Störeinflüssen zu schützen, kann in Weiterbildung der Erfindung eine Putzeinheit zum Reinigen der Messerschneide vor dem Schleifvorgang vorgesehen sein. Vorteilhafterweise kann die Putzeinheit unmittelbar vor dem Schleifwerkzeug des Schleifers angeordnet sein, so dass sie zusammen mit dem Schleifer an der Messerschneide entlang gefahren wird, insbesondere unmittelbar vor dem Schleifwerkzeug. Die Putzeinheit kann hierbei beweglich, beispielsweise rotierend, oder auch starr ausgebildet sein, beispielsweise nach Art einer Abziehklinge oder eines Schabers, der vor dem Schleifwerkzeug die Schneide entlang fährt.

Die genannte Putzeinheit kann hierbei unmittelbar vor dem Schleifwerkzeug auf das Messer einwirken, das gerade geschliffen wird, und/oder ein benachbartes Messer reinigen, das im nächsten Schleifzyklus geschliffen wird. Alternativ oder zusätzlich kann die Putzeinheit mehrere Putzelemente zum gleichzeitigen Putzen mehrerer Messer umfassen. Beispielsweise können einzelne Messergruppen oder auch alle Messer auf einmal gereinigt werden.

Um abzutragenden Schmutz in einer gewünschten Richtung abzutransportieren, kann die Putzeinheit in Weiterbildung der Erfindung einen Luftstromerzeuger zur Erzeugung eines Luftstroms besitzen, mit dem das zu reinigende Messer bzw. die zu reinigenden Messer beaufschlagt werden. Der Luftstrom kann hierbei in Form eine Druckluftstroms auf das zu reinigende Messer gerichtet sein, um den Schmutz wegzublasen. Alternativ oder zusätzlich kann ein Sauger einen Luftstrom von den Messern weg absaugen, um gelöste Schmutzpartikel entsprechend abzutransportieren.

Um auch gröbere oder festsitzendere Verunreinigungen beseitigen zu können, besitzt die Putzeinheit in Weiterbildung der Erfindung zumindest ein mechanisch arbeitendes Putzelement, beispielsweise in Form einer rotierenden Bürste. Der Reinigungsprozess kann trocken, aber auch nass, beispielsweise durch einen unterstützenden Flüssigkeitsstrahler und/oder -sprüher ausgeführt werden.

Um eine Brandgefahr, beispielsweise bei getrocknetem Erntegut wie Heu zu vermeiden, ist das Schleifwerkzeug des Schleifers zumindest zu dem Förderkanal hin, vorzugsweise zu allen Erntegut führenden Maschinenabschnitten hin durch eine Abdeckung abgedeckt, vorzugsweise durch eine Kapselung gekapselt, so dass durch den Schleifvorgang entstehende Funken nicht in Richtung des Ernteguts abfliegen können. Besitzt der Schleifer als Schleifwerkzeug eine rotierende Schleifscheibe, kann die Schleifscheibe zumindest über einen Abschnitt ihres Umfangs von einer kapselförmigen Abdeckung umschlossen sein, die eine Austrittsöffnung besitzt, die vorteilhafterweise von den Erntegut führenden Maschinenabschnitten weg gerichtet ist. In Weiterbildung der Erfindung kann die genannte Schleifwerkzeugkapselung ihre Austrittsöffnung in einem Sektor besitzen, der von horizontal nach hinten bis vertikal nach unten gerichtet ist. Vorteilhafterweise ist dabei hinter der Austrittsöffnung der Kapselung eine Auffangvorrichtung vorgesehen, beispielsweise eine Auffangschale, in die die abgehenden Funken und Partikel abgeleitet werden.

Um die Funken und Partikel in die gewünschte Richtung zu lenken, kann der sich in der Kapselung einstellende Luftzug genutzt werden. Um den Abtransport in die gewünschte Richtung, insbesondere in die Auffangvorrichtung hinein zu unterstützen, kann weiterhin ein Luftstromerzeuger vorgesehen sein, beispielsweise in Form eines Druckluftgebläses und/oder eines Saugers, um die Funken und Partikel in die Auffangvorrichtung zu blasen bzw. zu saugen.

Die Steuervorrichtung der Schleifvorrichtung kann das Schleifen der Messer grundsätzlich in verschiedener Art und Weise ansteuern. Beispielsweise kann je nach Zustand der Messerschneide ein Schleifvorgang vorgeschlagen werden bzw. die Notwendigkeit hierzu angezeigt werden. Alternativ oder zusätzlich kann ein Messerschleifen automatisch nach jedem oder nach einer bestimmten Anzahl von Ladevorgängen eingeleitet werden.

Wird ein Messerschleifvorgang initiiert, können grundsätzlich alle Messer geschliffen werden. Um ein effizienteres Schleifen zu erreichen, kann jedoch je nach Zustand der Messerschneide eine Messerauswahl für den Schleifvorgang vorzugsweise automatisch anhand der noch verbliebenen Messerschärfe vorgenommen werden. Die Steuervorrichtung kann hierzu vorteilhafterweise eine Bestimmungseinrichtung zur Bestimmung der Messerschärfe umfassen und anhand der jeweils bestimmten Messerschärfe entscheiden, ob ein jeweiliges Messer geschliffen werden muss oder nicht.

Um auch kürzere Ladepausen nutzen zu können, kann in Weiterbildung der Erfindung auch vorgesehen sein, dass bei jedem Schleifvorgang nur eine Untergruppe der Messer geschliffen und in verschiedenen Schleifvorgängen verschiedene Untergruppen geschliffen werden.

Dabei können grundsätzlich verschiedene Ladepausen genutzt werden. Beispielsweise kann auch auf dem Feld in einer Ladepause, beispielsweise im Bereich des Vorgewendes geschliffen werden. Vorteilhafterweise jedoch wird der Schleifvorgang hauptsächlich während Transportfahrten ausgeführt. Die Steuervorrichtung kann hierbei verschiedene Betriebsparameter überwachen, die eine Transportfahrt anzeigen. Beispielsweise kann die Fahrgeschwindigkeit überwacht und bei Überschreiten einer Fahrgeschwindigkeitsschwelle über eine vorbestimmte Zeit der Schleifvorgang in Gang gesetzt werden. Alternativ oder zusätzlich kann das Verbringen der Aufnahmevorrichtung und/oder eines anderen Maschinenteils in eine Transportstellung überwacht werden und der Schleifvorgang dann initiiert werden, wenn das genannte Bauteil in seine Transportstellung verbracht ist. Alternativ oder zusätzlich kann der Befüllungsgrad eines Entegutspeichers überwacht werden. Ist der Erntegutspeicher vollständig gefüllt und die Aufnahmevorrichtung abgeschaltet, kann davon ausgegangen werden, dass eine längere Ladepause eintritt, während derer der Schleifvorgang ausgeführt werden kann.

Die Schleifvorrichtung kann in Weiterbildung der Erfindung integraler Bestandteil der Erntemaschine sein. Alternativ hierzu kann es jedoch auch vorteilhaft sein, die Schleifvorrichtung als separate Baugruppe auszubilden, die mittels einer lösbaren Kupplungsvorrichtung an die Erntemaschine angedockt werden kann, wenn die Messer zu schleifen sind und wieder abgedockt werden kann, wenn der Schleifvorgang abgeschlossen ist.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Erntemaschine in Form eines Ladewagens nach einer vorteilhaften Ausführung der Erfindung, der eine Aufnahmevorrichtung in Form einer Pickup mit einem Messerbalken und einer diesem zugeordneten Schleifvorrichtung aufweist,
- Fig. 2:: eine ausschnittsweise, perspektivische Darstellung der Messerschleifvor- richtung der Erntemaschine aus Fig. 1, die die Quertraverse mit einem auf die Messer fahrbaren Positionierkamm, die Lenkeraufhängung der Quertraverse zum Anheben und Absenken der Quertraverse, einen auf der Quertraverse verfahrbaren Querschlitten sowie den auf dem Quer- schlitten verfahrbaren Längsschlitten mit dem daran befestigten Schleifer zeigt,
- Fig. 3:: eine Draufsicht auf die Schleifvorrichtung aus Fig. 2,
- Fig. 4:: eine Seitenansicht der Schleifvorrichtung aus den Figuren 2 und 3 in ei- ner Blickrichtung parallel zur Verfahrrichtung des Querschlittens, wobei die Quertraverse in einer abgesenkten Schleifstellung gezeigt ist,
- Fig. 5:: eine Seitenansicht der Schleifvorrichtung ähnlich Fig. 4, wobei die Quer- traverse in ihrer angehobenen Nicht-Schleifstellung gezeigt ist,
- Fig. 6:: eine ausschnittsweise Seitenansicht des Längsschlittens mit dem daran befestigten Schleifer, die die beiden kulissenartigen, nutförmigen Füh- rungskonturen zur Steuerung der Längsbewegung zeigt,
- Fig. 7:: eine Draufsicht auf den Längsschlitten aus Fig. 6, und
- Fig. 8:: eine schematische Seitenansicht einer Erntemaschine in Form einer Presse, die eine Aufnahmevorrichtung umfassend eine Pickup besitzt, wobei einem Messerbalken eine Schneideinrichtung gemäß den vorher- gehenden Figuren zugeordnet ist.

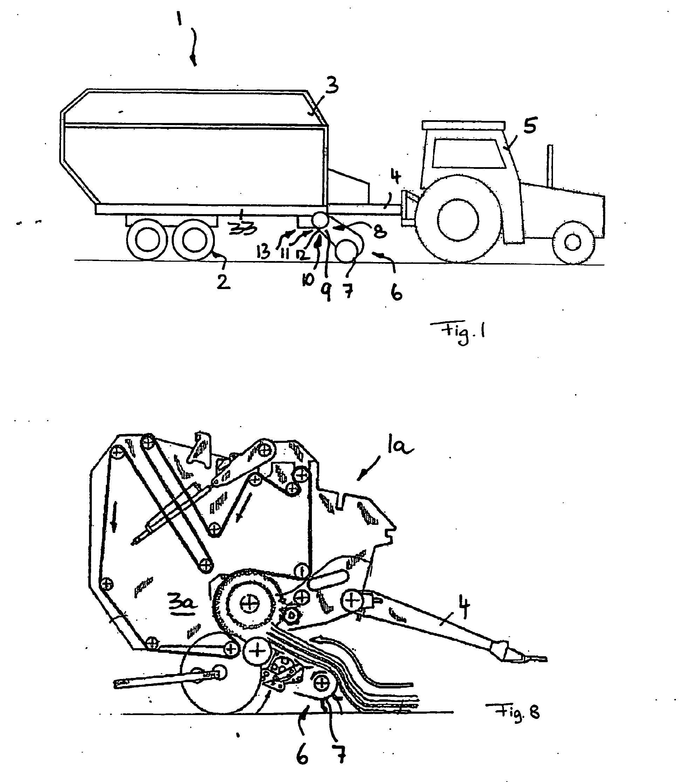

Der in Fig. 1 gezeigte Ladewagen 1 umfasst in an sich bekannter Weise ein Fahrwerk 2, das einen Maschinenrahmen 33 trägt, der über eine Deichsel 4 an einen Schlepper 5 anbaubar ist. Der Maschinenrahmen 33 trägt einen Erntegutspeicher 3, der an seinem vorderen Ende durch eine Aufnahmevorrichtung 6 mit Erntegut beladbar ist, das von der Aufnahmevorrichtung 6 vom Boden aufgenommen wird.

Die genannte Aufnahmevorrichtung 6 umfasst hierbei in der gezeichneten Ausführung eine um eine liegende Querachse rotatorisch antreibbare Stachelwalze 7, die das Erntegut vom Boden aufnimmt und an einen ebenfalls um eine liegende Querachse antreibbaren Förderrotor 8 übergibt, der das Erntegut durch einen Förderkanal 9 hindurch in den genannten Erntegutspeicher 3 fördert.

An dem Förderkanal 9 ist eine Schneidvorrichtung 10 vorgesehen, die einen liegend quer angeordneten Messerbalken 11 umfasst, der eine Vielzahl von in Reihe nebeneinander angeordneten Messern 12 trägt, die von unten her durch den Boden des genannten Förderkanals 9 hindurchtreten und in den Förderkanal 9 hineinragen, so dass das durch den Förderrotor 8 durch den Förderkanal 9 hindurch geförderte Erntegut geschnitten wird.

Um die genannten Messer 12 schleifen oder auch warten und austauschen zu können, kann der Messerbalken 11 abgesenkt werden, so dass die Messer 12 außerhalb des Förderkanals 9 im Wesentlichen unterhalb des Bodens des Förderkanals 9 und unterhalb des Bodens des Erntegutspeichers 3 frei zugänglich zu liegen kommen. Unter dem Boden des Erntegutspeichers 3 ist eine Schleifvorrichtung 13 angeordnet, mittels derer die genannten Messer 12 in der ausgeschwenkten Schleifposition unmittelbar am Ladewagen 1 geschliffen werden können.

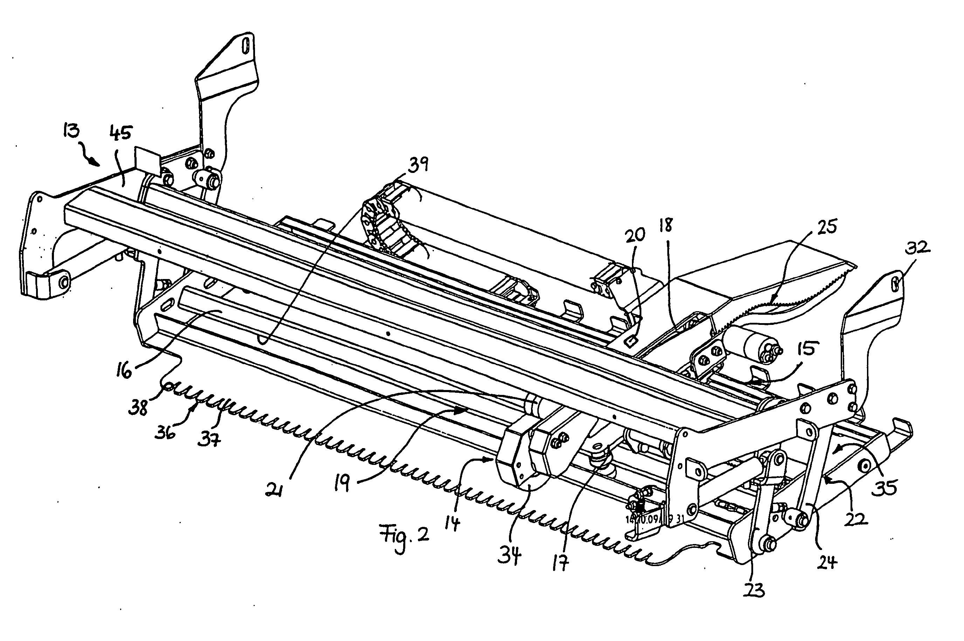

Die genannte Schleifvorrichtung 13 ist in den Figuren 2 bis 7 näher gezeigt. Sie umfasst in der gezeichneten Ausführungsform einen Schleifer 14 mit einer um eine liegende Querachse rotierenden Schleifscheibe 34, der von Messer zu Messer sowie entlang der Schneide eines jeweiligen Messers verfahren werden kann, um die Schneiden der Messer 12 zu schleifen. Ohne in den Zeichnungen eigens gezeigt zu sein, könnten auch mehrere Schleifer 14 nebeneinander angeordnet sein, um mehrere Messer 12 parallel zueinander zu schleifen.

Der genannten Schleifer 14 kann hierbei einen Antrieb zum Antreiben der Schleifscheibe 34 in Form eines drehzahlsteuerbaren Motors, vorzugsweise eines Elektromotors oder eines Hydromotors besitzen. Der genannte Schleifer 14 ist dabei an einer Schlittenaufhängung befestigt, die in den Figuren 2 bis 4 näher gezeigt ist.

Eine Quertraverse 16, die sich über die gesamte Breite der Aufnahmevorrichtung 6 bzw. der dieser zugeordneten Schneidvorrichtung 10 erstreckt, ist mittels einer Hubvorrichtung 35 am Maschinenrahmen 33 des Ladewagens 1 aufgehängt, so dass die gesamte Quertraverse 16 mit den daran gelagerten Komponenten der Schleifvorrichtung 13 unter dem Boden des Ladewagens 1 abgesenkt und wieder angehoben werden kann, insbesondere auf die aus dem Förderkanal 9 ausgeschwenkten Messer 12 zu bewegt und von diesen wieder wegbewegt werden kann. In der gezeichneten Ausführung umfasst dabei die Hubvorrichtung 35 eine Lenkerführung 22 für die Quertraverse 16. Auf jeder Seite der Quertraverse 16 sind zwei Lenker 23 und 24 um eine liegende Querachse schwenkbar an der Quertraverse 16 angelenkt. Mit ihren anderen Enden sind die genannten Lenker 23 und 24 ebenfalls um liegende Querachsen schwenkbar an einem maschinenrahmenfesten Trägerteil bzw. einem mit dem Maschinenrahmen 33 kuppelbaren Trägerteil 45 angelenkt.

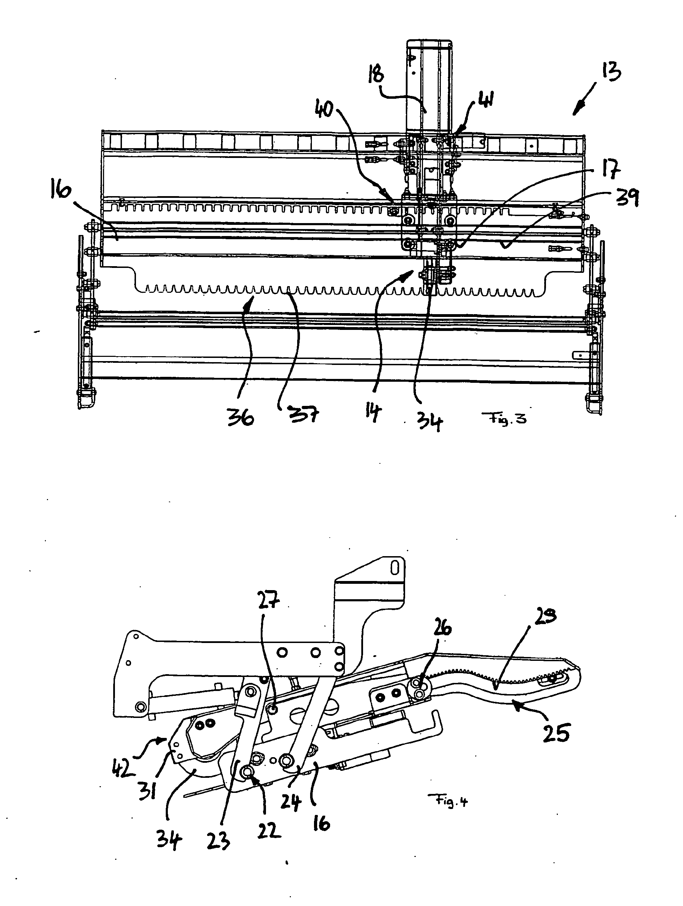

Wie die Figuren 2 und 4 zeigen, sind die genannten Lenker 23 und 24 näherungsweise parallel zueinander angeordnet und näherungsweise gleich lang ausgebildet, so dass sie näherungsweise eine Parallelogrammlenkerführung bilden. Je nach Stellung der ausgeschwenkten Messer 12 kann es jedoch auch vorteilhaft sein, von einer Parallelogrammanordnung der Lenker 23 und 24 abzuweichen, so dass zusätzlich zu einer translatorischen Hubbewegung auch noch eine Schwenkbewegung überlagert wird, so dass die Quertraverse 16 von oben her mit einer überlagerten Schwenkbewegung auf die Messer 12 gefahren werden kann.

Die genannten Trägerteile 35, an denen die Lenkerführung 22 für die Quertraverse 16 aufgehängt ist, kann vorteilhafterweise mittels Schnellkuppelmittel 32 rechts und links am Maschinenrahmen 33 des Ladewagens 1 lösbar befestigt werden, beispielsweise über Bolzensteckverbindungen und/oder Schnellspanner, so dass die Schleifvorrichtung 13 zum Zwecke des Schleifens an den Ladewagen 1 angedockt und dann, wenn kein Schleifen benötigt, auch wieder abgedockt werden kann.

Wie Fig. 2 zeigt, umfasst die Quertraverse 16 an ihrem der Schneidvorrichtung 10 zugewandten Ende eine Positionier- und/oder Haltevorrichtung, die die Messer 12 beim Schleifen relativ zu der Quertraverse 16 in einer definierten Position hält. In der gezeichneten Ausführung umfasst die genannte Positionier- bzw. Haltevorrichtung 36 einen Eingriffskamm 37 mit einer Vielzahl von schlitzförmigen Aufnahmemäulern bzw. -ausnehmungen 38, deren Beabstandung voneinander der Teilung der Messer 12 entspricht, so dass der genannte Eingriffskamm 37 passgenau auf die ausgeschwenkten Messer 12 fahrbar ist und die genannten Messer 12 in den Aufnahmeausnehmungen 38 gegen seitliches Wegbiegen beim Schleifen gesichert sind. Vorteilhafterweise können sich die Aufnahmeausnehmungen 38 zu ihrer offenen Seite hin ausweiten, um ein einfacheres Einfangen der Messer 12 zu ermöglichen.

Die Quertraverse 16 ist in der gezeichneten Ausführung als Rahmen ausgebildet und umfasst eine Querführung 39, an der ein Querschlitten 17 über die gesamte Breite der Quertraverse 16 verfahrbar gelagert ist. Der Querschlitten 17 kann hierdurch entlang einer liegenden Querachse von Messer zu Messer verfahren werden, um den Schleifer 14 entsprechend zu positionieren. In der gezeichneten Ausführung umgreift der Querschlitten 17 dabei nach Art einer Laufkatze mit mehreren Lagerpunkten die Querführung 39, so dass der Querschlitten 17 verdreh- und torsionssicher geführt ist und nur in der genannten Querrichtung verfahrbar ist.

Zum Verfahren des Querschlittens 17 entlang der Quertraverse 16 ist hierbei ein Querschlittenantrieb 40 vorgesehen, der in der gezeichneten Ausführung einen Hydromotor 21 umfasst, ggf. jedoch auch einen Elektromotor oder auch einen anderen Antriebsaktor umfasst könnte. Der genannte Hydromotor 21 treibt ein Antriebsritzel an, welches mit einem sich entlang der Querführung 39 erstreckenden Zahnstangenprofil kämmt.

Auf dem genannten Querschlitten 17 sitzt ein Längsschlitten 18, der in einer vertikalen Ebene senkrecht zu der Querachse, die die Bewegungsachse des Querschlittens 17 bildet, verfahrbar ist. Der Längsschlitten 18 ist hierzu mittels einer Längsführung 25 an dem genannten Querschlitten 17 verschieblich gelagert. Die genannte Längsführung 25 ist hierbei nicht als gerade Linearführung ausgebildet, sondern realisiert eine von einer Geraden abweichende Stellbewegungsbahn, die grundsätzlich in verschiedener Weise ausgebildet, insbesondere bogenförmig gekrümmt, geknickt und ggf. auch abschnittsweise gerade ausgebildet sein kann und an den Verlauf der Schneide der Messer 12 angepasst ist. Genauer gesagt ist die Längsführung 25 derart geformt, dass der an dem Längsschlitten 18 befestigte Schleifer 14 mit seiner Schleifscheibe 34 eine dem Verlauf der Schneide der Messer 12 folgende Bahn abfährt.

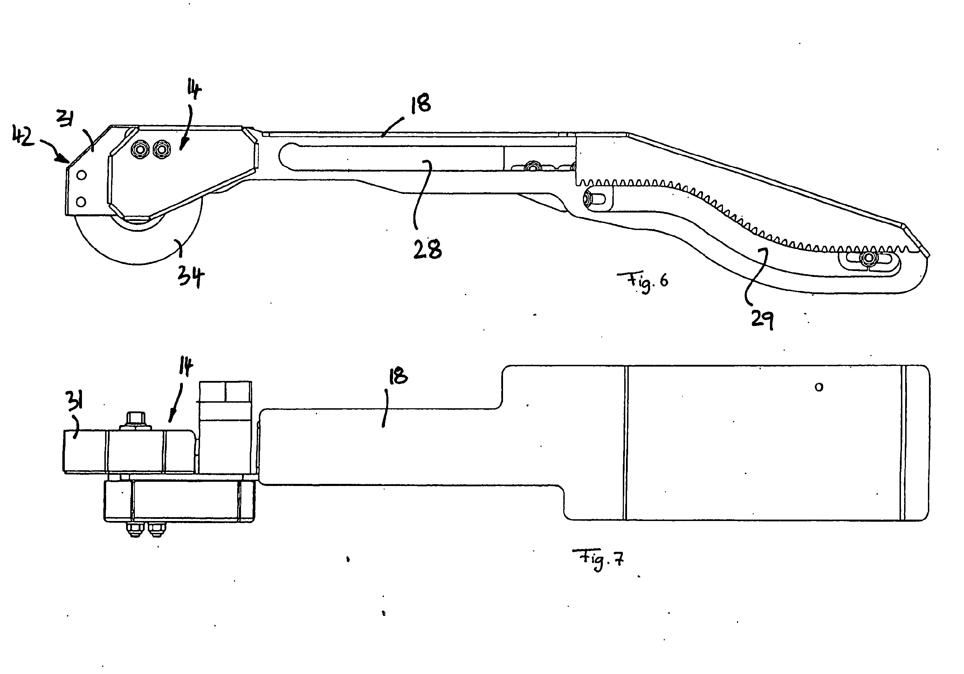

In der gezeichneten Ausführung umfasst die Längsführung 25 hierbei zwei kulissenartige Führungskonturen 28 und 29, die in der gezeichneten Ausführung in Form von Längsnuten an dem Längsschlitten 18 ausgebildet sind. Genauer gesagt sind rechts und links an dem Längsschlitten 18 jeweils ein Paar vordere Führungskonturen 28 und ein Paar hintere Führungskonturen 29 vorgesehen, vgl. Fig. 6 und 7, in denen Anlenkpunkte 26 und 27 laufen, die an dem Querschlitten 17 ortsfest befestigt sind.

Wie die Figuren 4 und 6 zeigen, sind in der gezeichneten Ausführung die genannten Führungskonturen 28 und 29 im Wesentlichen hintereinander auf demselben Höhenniveau liegend angeordnet, wodurch eine flach bauende Ausbildung des Längsschlittens 18 erzielt wird.

Wie Fig. 6 zeigt, besitzt die vordere Führungskontur 28 einen im Wesentlichen geraden Verlauf, während die hintere Führungskontur 29 einen bogenförmig gekrümmten Verlauf besitzt, der in der gezeichneten Ausführung zwei ineinander übergehende, gegenläufig gekrümmte bogenförmige Abschnitte sowie an diese beiden bogenförmigen Abschnitte anschließende gerade Abschnitte besitzt. Durch den gekrümmten Verlauf der hinteren Führungskontur 29 erhält der Längsschlitten 18 beim Verfahren eine Schwenkbewegungskomponente, so dass die Schleifscheibe 34 eine entsprechend dem Verlauf der Schneiden der Messer 12 gekrümmte Schleifbahn abfährt.

Zum Verfahren des Längsschlittens 18 in Längsrichtung, d.h. entlang der Längsführung 25 ist ein Längsschlittenantrieb 41 vorgesehen, der grundsätzlich verschieden ausgebildet sein kann, beispielsweise einen Druckmittelzylinder umfassen kann. In der gezeichneten Ausführung ist vorteilhafterweise ein Hydraulikmotor - der ggf. auch als Elektromotor ausgebildet sein kann - vorgesehen, der ein Ritzel antreibt, welches mit einer sich entlang der Führungskontur 29 erstreckenden Zahnstange kämmt, so dass der Längsschlitten 18 präzise entlang der Längsführung 25 vor- und zurück verfahren werden kann.

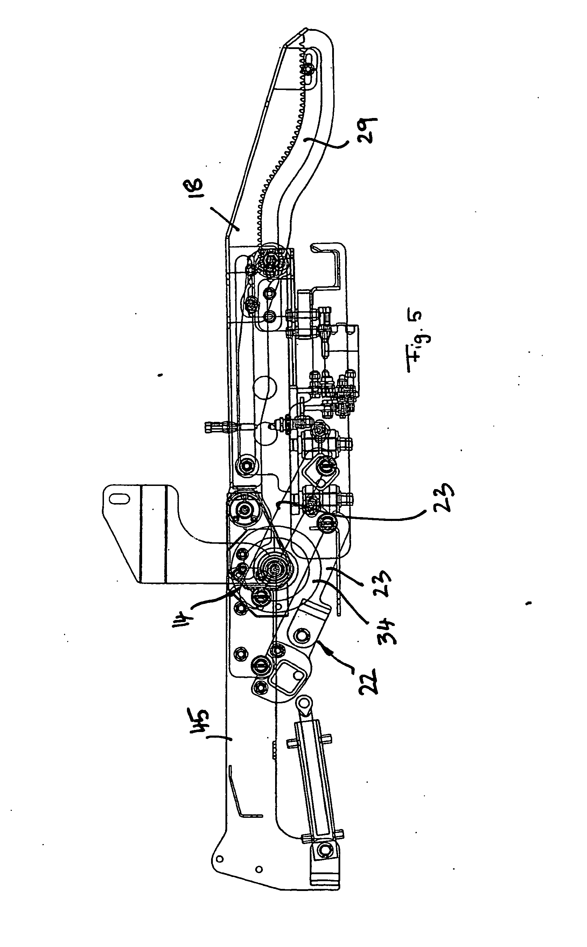

Damit ergibt sich folgende Funktion: Vorzugsweise während einer Transportfahrt beispielsweise zurück vom Feld zum Hof, werden die Messer 12 durch Absenken des Messerbalkens 11 aus dem Förderkanal 9 in ihre Schleifstellung verbracht. Sodann wird die Schleifvorrichtung 13 durch Absenken der Quertraverse 16 aus ihrer in Fig. 5 gezeigten Inaktivstellung auf die Messer 12 zu in ihre Schleifstellung gemäß Fig. 4 verbracht, wobei der Eingriffskamm 37 auf die zu schleifenden Messer 12 aufgefahren wird, so dass die Messer 12 seitlich fixiert und die Quertraverse 16 relativ zu den Messern 12 exakt positioniert ist.

Sodann kann beispielsweise mittels einer optischen Sensoreinrichtung die Schärfe der Schneiden der Messer 12 überprüft werden, um zu entscheiden, welche der Messer 12 geschliffen werden müssen. Sodann wird der Querschlitten 17 auf der Quertraverse 16 zu einem zu schleifenden Messer verfahren, so dass der Schleifer 14 mit seiner Schleifscheibe 34 neben das zu schleifende Messer in den Zwischenraum zwischen zwei entsprechend benachbarten Messern gefahren werden kann, was durch Nach-vorne-Fahren des Längsschlittens 18 bewirkt wird. Die Stellbewegungen des Querschlittenantriebs 40 sowie des Längsschlittenantriebs 41 werden hierbei durch eine Steuervorrichtung 20 gesteuert, die vorteilhafterweise auf dem Längsschlitten 18 oder dem Querschlitten 17 positioniert sein kann. Über entsprechende Wegsensoren kann die Steuervorrichtung 20 die exakte Position der Schlitten bzw. der Schleifscheibe erfassen und die Antriebe entsprechend ansteuern.

Hat die Schleifscheibe 34 ihre Position neben einer zu schleifenden Schneide erreicht, wird der Querschlittenantrieb 40 ein Stück weit derart bewegt, dass die Schleifscheibe 34 seitlich gegen das zu schleifende Messer 12 gedrückt wird.

Die Steuervorrichtung 20 steuert dabei den Querschlittenantrieb 40 derart an, dass der Schleifer 14 mit einer definierten Andrückkraft gegen das Messer 12 gedrückt wird. Der Querschlittenantrieb 40 bildet insofern Teil einer Andrückvorrichtung 19, die für ein elastisches Andrücken der Schleifscheibe 34 beim Verfahren entlang der Schneide des Messers 12 sorgt. Die Höhe der Andrückkraft kann hierbei durch eine entsprechende Druckansteuerung des Hydromotors 21 eingestellt werden und in der eingangs genannten Weise in Abhängigkeit verschiedener Betriebsparameter variiert werden.

Um die Schleifscheibe 34 an der Schneide des jeweiligen Messers 12 entlang zu fahren, wird der Längsschlittenantrieb 41 von der Steuervorrichtung 20 entsprechend angesteuert, so dass der Längsschlitten 18 und damit der Schleifer 14 unter Aufrechterhalten der genannten Andrückkraft entlang der durch die Längsführung 25 vorgegebenen Bewegungsbahn verfahren wird. Ggf. kann der Längsschlitten vor- und zurück- oder ggf. auch mehrfach vor- bzw. zurückgefahren werden, um ein Messer 12 in mehreren Schleifdurchgängen zu schleifen.

Ist der Schleifvorgang abgeschlossen, wird die Andrückkraft heruntergefahren und der Querschlittenantrieb 40 von dem geschliffenen Messer ein Stück weit weg bewegt, so dass der Schleifer 14 mit seiner Schleifscheibe 34 durch Rückwärtsbewegen des Längsschlittens 18 aus den Messern 12 herausgefahren werden kann. Der Querschlitten 17 fährt sodann das nächste zu schleifende Messer an, um den genannten Schleifzyklus am nächsten Messer zu wiederholen.

Wie Fig. 4 zeigt, ist der Schleifscheibe 34 eine kapselförmige Abdeckung 42 zugeordnet, die die Schleifscheibe 34 in einem Sektor ihres Umfangs vollständig abdeckt, der dem Förderkanal 9 sowie dem Boden des Erntegutspeichers 3 zugewandt ist. Die kapselförmige Abdeckung 42 lässt dabei im Wesentlichen nur die untere Hälfte der Schleifscheibe 34 offen und besitzt eine Austrittsöffnung, die schräg nach hinten unten gerichtet ist, um beim Schleifen entstehende Funken und Partikel vom Erntegut weg zu führen. Der genannten Austrittsöffnung kann eine nicht näher gezeigte Auffangschale nachgeordnet sein, um Funken auch nicht auf den Boden treffen zu lassen. Ggf. kann das Abführen der Funken und Partikel durch einen saugenden oder blasenden Luftstrom unterstützt werden.

Um den Schleifvorgang nicht durch Erdkrusten oder dergleichen Verunreinigungen zu beeinträchtigen, kann dem Schleifer 14 eine Putzeinheit 30 vorgeschaltet sein, die der Schleifscheibe 34 unmittelbar vorauslaufend das Messer 12 reinigt, beispielsweise durch eine rotierende Borstenwalze. Auch hier kann unterstützend ein saugender oder blasender Luftstrom vorgesehen sein, um gelöste Schmutzpartikel abzutransportieren. Die Putzeinheit 20 kann dabei ggf. auch ein das jeweils nächste Messer bereits reinigendes Putzelement besitzen.

Während Fig. 1 einen Ladewagen 1 zeigt, kann die Schleifvorrichtung 13 in vorteilhafter Weise auch bei einer Presse 1 a Verwendung finden, wie sie Fig. 8 zeigt. Die Aufnahmevorrichtung 6 der Presse 1 a ist entsprechend der des Ladewagens 1 ausgebildet, so dass auf die vorangehende Beschreibung verwiesen wird. Lediglich wird das Erntegut nicht in einen Erntegutspeicher 3, sondern stattdessen in eine Pressenkammer 3a gefördert. Im Übrigen kann auf die vorausgehende Beschreibung verwiesen werden.

## Patentansprüche

1. Erntemaschine, insbesondere in Form eines Ladewagens und/oder einer Ballenpresse, mit einer Aufnahmevorrichtung (6) zum Aufnehmen von Erntegut vom Boden, einem an die Aufnahmevorrichtung (6) anschließenden Förderkanal (9), der in einen Erntegutspeicher (3) und/oder eine Verarbeitungskammer, insbesondere Pressenkammer (3a), führt, einer Schneidvorrichtung (10) mit mehreren Messern (12) zum Zerschneiden des von einem Förderer (8) durch den Förderkanal (9) geförderten Ernteguts, sowie einer Schleifvorrichtung (13) zum Schleifen der Messer (12), die zumindest einen Schleifer (14), eine Schleiferführung (15) sowie einen Stellantrieb für den Schleifer (14) umfasst, mittels dessen der Schleifer (14) über die Schneide eines jeweiligen Messers (12) sowie von Messer zu Messer bewegbar ist, wobei die Schleiferführung (15) eine Quertraverse (16) umfasst, an der ein Querschlitten (17) quer zur Schnittrichtung der Messer (12) verfahrbar angeordnet ist, an dem der Schleifer (14) in Längsrichtung verfahrbar angeordnet ist, **dadurch gekennzeichnet, dass** der Schleifer (14) an einem Längsschlitten (18) befestigt ist, der in Längsrichtung parallel zur Schneide der Messer (12) an dem Querschlitten (17) verschieblich geführt ist, und eine Andrückvorrichtung (19) zum Andrücken des Schleifers (14) beim Schleifen eines Messers (12) gegen das zu schleifende Messer quer zur Schnittrichtung vorgesehen ist.

2. Erntemaschine nach dem vorhergehenden Anspruch, wobei die Andrückvorrichtung (19) eine Spannvorrichtung zum Aufbringen einer elastischen Spannkraft auf den Querschlitten (17) umfasst.

3. Erntemaschine nach einem der vorhergehenden Ansprüche, wobei eine Steuervorrichtung (20) zur Steuerung der Andrückkraft in Abhängigkeit zumindest eines Betriebsparameters der Schleifvorrichtung (13) vorgesehen ist.

4. Erntemaschine nach dem vorhergehenden Anspruch, wobei die Steuervorrichtung (20) Steuermittel zu Veränderung der Andrückkraft in Abhängigkeit der Verschiebestellung des Längsschlittens (18) und/oder Steuermittel zur Veränderung der Andrückkraft in Abhängigkeit einer Schleifwerkzeuggeschwindigkeit, insbesondere einer Schleiferdrehzahl, eines Schleiferdrehmoments und/oder eines Hydraulikdrucks des Schleifers und/oder Steuermittel zur Veränderung der Andrückkraft in Abhängigkeit eines erfassten Messerzustands, insbesondere einer erfassten Messerschärfe, aufweist.

5. Erntemaschine nach einem der vorhergehenden Ansprüche, wobei die Andrückvorrichtung (19) einen druckmittelbetätigten Aktor, insbesondere einen Hydromotor (21) und/oder einen elektrischen Aktor, insbesondere einen Elektromotor, zur Erzeugung der Andrückkraft aufweist.

6. Erntemaschine nach einem der vorhergehenden Ansprüche, wobei der Aktor der Andrückvorrichtung (19) von dem Stellantrieb des Querschlittens (17) gebildet ist.

7. Erntemaschine nach einem der vorhergehenden Ansprüche, wobei die Andrückvorrichtung (19) einen mechanischen Spanner, vorzugsweise umfassend eine Federeinrichtung und eine Rastklinke, zum Aufbringen der Andrückkraft aufweist.

8. Erntemaschine nach einem der vorhergehenden Ansprüche, wobei eine Bestimmungseinrichtung zur Bestimmung des Fehlens eines zu schleifenden Messers und/oder eines Bruchs eines zu schleifenden Messers vorgesehen ist, wobei die Bestimmungseinrichtung eine Überwachungseinheit zur Überwachung der beim Schleifen eines jeweiligen Messers auftretenden Andrückkraft und eine Auswerteeinheit zur Bestimmung des Fehlens oder des Bruchs eines Messers anhand der überwachten Andrückkraft und/oder eine optische Erfassungseinrichtung zur optischen Erfassung eines Messerbruchs oder des Fehlens eines Messers aufweist.

9. Erntemaschine nach einem der vorhergehenden Ansprüche, wobei die Quertraverse (16) in einer aufrechten Ebene beweglich gelagert ist derart, dass die Quertraverse (16) auf die Messer (12) zu und von diesen weg bewegbar ist, wobei die Quertraverse (16) vorzugsweise an einer Lenkerführung (22) aufgehängt ist, deren Lenker (23, 24) um Schwenkachsen parallel zur Verfahrrichtung der Quertraverse (16) schwenkbar gelagert sind.

10. Erntemaschine nach einem der vorhergehenden Ansprüche, wobei die Quertraverse (16) eine vorzugsweise kammartige, mit den Messern in Eingriff bringbare Positionier- und/oder Haltevorrichtung zur Positionierung und/oder Fixierung der zu schleifenden Messer relativ zur Quertraverse und/oder umgekehrt der Quertraverse relativ zu den Messern (12) aufweist.

11. Erntemaschine nach einem der vorhergehenden Ansprüche, wobei die Längsführung des Längsschlittens (18) an dem Querschlitten (17) zwei voneinander beabstandete Anlenkpunkte (26, 27) umfasst, die an einem Paar kulissenartiger Führungskonturen (28, 29), vorzugsweise Führungsnuten, verschieblich geführt sind.

12. Erntemaschine nach dem vorhergehenden Anspruch, wobei die beiden kulissenartigen Führungskonturen (28, 29) im Wesentlichen liegend hintereinander auf im Wesentlichen demselben Höhenniveau angeordnet und/oder übereinander auf verschiedenen Höhenniveaus einander in Längsrichtung überlappend angeordnet und/oder ineinander übergehend und/oder von einer durchgehenden Führungskontur gebildet sind.

13. Erntemaschine nach einem der Ansprüche 11 oder 12, wobei zumindest eine der kulissenartigen Führungskonturen (28, 29) zumindest einen bogenförmig gekrümmten Abschnitt und einen an den bogenförmig gekrümmten Abschnitt anschließenden anders gekrümmten oder geraden Abschnitt aufweist.

14. Erntemaschine nach einem der vorhergehenden Ansprüche, wobei die kulissenartigen Führungskonturen (28, 29) an dem Längsschlitten (18) ausgebildet sind und die Anlenkpunkte (26, 27) an dem Querschlitten (17) ortsfest vorgesehen sind.

15. Erntemaschine nach einem der vorhergehenden Ansprüche, wobei die Quertraverse (16) in mehreren Ebenen, vorzugsweise in verschiedenen Höhen, positionierbar ist, um Messer (12) in zwei oder mehr Schneidebenen zu schleifen.

16. Erntemaschine nach einem der vorhergehenden Ansprüche, wobei eine Putzeinheit (30) zum Reinigen der zu schleifenden Messer (12) dem Schleifer (14) vorgeschaltet ist, wobei die Putzeinheit (30) vorzugsweise zumindest ein Putzelement zum Reinigen eines benachbarten, beim nächsten Schleifvorgang zu schleifenden Messers (12) aufweist und/oder mehrere Putzelemente zum Reinigen mehrerer zu schleifender Messer (12) aufweist und/oder einen Luftstromerzeuger zum Wegblasen oder Absaugen von Verunreinigungen und/oder einen Flüssigkeitsstrahl- und/oder -sprühreiniger zum Abspritzen und/oder Absprühen von Verunreinigungen aufweist.

17. Erntemaschine nach einem der vorhergehenden Ansprüche, wobei der Schleifer (14) eine Abdeckung zur Abdeckung des Schleifwerkzeugs zu dem Förderkanal (9) hin und/oder zu einem Erntegut führenden Maschinenabschnitt hin aufweist, wobei vorzugsweise die Abdeckung eine Kapselung (31) umfasst, die das Schleifwerkzeug zumindest zu einem Halbraum hin umschließt und eine Austrittsöffnung für vom Schleifwerkzeug abgeschleuderte Funken und Partikel aufweist, die vom Förderkanal (9) weg gerichtet zum Boden hin gerichtet, insbesondere schräg nach hinten unten gerichtet ist, wobei vorzugsweise der genannten Austrittsöffnung eine Auffangvorrichtung, insbesondere Auffangschale nachgeordnet ist und/oder dem Schleifwerkzeug und/oder der diesem zugeordneten Abdeckung ein Luftstromerzeuger zum Wegblasen und/oder Absaugen der vom Schleifwerkzeug abgeschleuderten Funken und Partikel zugeordnet ist.

18. Erntemaschine nach einem der vorhergehenden Ansprüche, wobei die Schleifvorrichtung (13) als separate Baugruppe ausgebildet ist, die über eine Kupplungsvorrichtung, vorzugsweise umfassend Schnellkuppelmittel (32) beispielsweise in Form von Schnellspannern, zum Schleifen der Messer (12) an einen Maschinenrahmen und oder einen Schneidbalken andockbar und nach dem Schleifen hiervon wieder abdockbar ist und/oder die Steuervorrichtung (20) zur Steuerung der Schleifvorrichtung (13) an einer zur Schneidvorrichtung (10) zugehörigen Baugruppe, vorzugsweise am Längsschlitten (18) oder am Querschlitten (17) montiert ist und die Bewegungen der genannten Baugruppe der Schleifvorrichtung mitmacht.

## Claims

1. A harvester, in particular in the form of a self-loading waggon and/or of a baler, having a pick-up apparatus (6) for picking up harvest from the ground, having a conveying channel (9) which adjoins the pick-up apparatus (6) and leads into a harvest store (3) and/or into a processing chamber, in particular a pressing chamber (3a), having a cutting apparatus (10) with a plurality of blades (12) for cutting up the harvest conveyed through the conveying channel (9) by a conveyor (8), and having a grinding apparatus (13) for grinding the blades (12) which includes at least one grinder (14), a grinder guide (15) and an actuating drive for the grinder (14) by means of which the grinder (14) can be moved over the cutting edge of a respective blade (12) as well as from blade to blade, wherein the grinder guide (15) includes a crossbar (16) at which a cross slide (17) is arranged movable transversely to the cutting direction of the blades (12), with the grinder (14) being arranged movable in the longitudinal direction at said crossbar, **characterised in that** the grinder (14) is fastened to a longitudinal slide (18) which is guided movably at the cross slide (17) in the longitudinal direction in parallel to the cutting edge of the blades (12); and **in that** a pressing apparatus (19) is provided for pressing the grinder (14) transversely to the cutting direction towards the blade to be ground on the grinding of a blade (12).

2. A harvester in accordance with the preceding claim, wherein the pressing apparatus (19) includes a clamping apparatus for applying an elastic clamping force to the transverse slide (17).

3. A harvester in accordance with one of the preceding claims, wherein a control apparatus (20) is provided for controlling the pressing force in dependence on at least one operating parameter of the grinding apparatus (13).

4. A harvester in accordance with the preceding claim, wherein the control apparatus (20) has control means for varying the pressing force in dependence on the movement position of the longitudinal slid (18) and/or has control means for varying the pressing force in dependence on a grinding tool speed, in particular on a speed of rotation of the grinder, on a grinder torque and/or on a
hydraulic pressure of the grinder and/or has control means for varying the pressing force in dependence on a detected blade condition, in particular on a detected blade sharpness.

5. A harvester in accordance with one of the preceding claims, wherein the pressing apparatus (19) has an actuator activated by a pressure means, in particular a hydraulic motor (21) and/or an electric actuator, in particular an electric motor, for generating the pressing force.

6. A harvester in accordance with one of the preceding claims, wherein the actuator of the pressing apparatus (19) is formed by the actuating drive of the cross slide (17).

7. A harvester in accordance with one of the preceding claims, wherein the pressing apparatus (19) has a mechanical clamp, preferably comprising a spring device and an engaging pawl, for applying the pressing force.

8. A harvester in accordance with one of the preceding claims, wherein a determination device is provided for determining the lack of a blade to be ground and/or a break of a blade to be ground, wherein the determination device has a monitoring unit for monitoring the pressing force occurring on the grinding of a respective blade and has an evaluation unit for determining the lack or the break of a blade with reference to the monitored pressing force and/or has an optical detection device for the optical detection of a blade brake or of the lack of a blade.

9. A harvester in accordance with one of the preceding claims, wherein the crossbar (16) is movably supported in an upright plane such that the crossbar (16) is movable toward and away from the blades (12), wherein the crossbar (16) is preferably suspended at a control lever guide (22) whose control levers (23, 24) are pivotably supported about pivot axes in parallel to the direction of travel of the crossbar (16).

10. A harvester in accordance with one of the preceding claims, wherein the crossbar (16) has a positioning and/or holding apparatus, which is preferably comb-like and which can be brought into engagement with the blades, for the positioning and/or fixing of the blades to be ground relative to the crossbar and/or, conversely, of the crossbar relative to the blades (12).

11. A harvester in accordance with one of the preceding claims, wherein the longitudinal guide of the longitudinal slide (18) at the cross slide (17) includes two pivotal connection points (26, 27) which are spaced apart from one another and which are displaceably guided at a pair of slot-like guide contours (28, 29), preferably guide grooves.

12. A harvester in accordance with the preceding claim, wherein the two slot-like guide contours (28, 29) are arranged substantially lying behind one another at substantially the same vertical level and/or are arranged above one another at different vertical levels overlapping one another in the longitudinal direction and/or are formed merging into one another and/or by a throughgoing guide contour.

13. A harvester in accordance with one of the claims 11 or 12, wherein at least one of the slot-like guide contours (28, 29) has at least one arcuately curved section and one differently curved section or straight section adjoining the arcuately curved section.

14. A harvester in accordance with one of the preceding claims, wherein the slot-like guide contours (28, 29) are formed at the longitudinal slide (18) and the pivotal connection points (26, 27) are provided at a fixed position at the cross slide (17).

15. A harvester in accordance with one of the preceding claims, wherein the crossbar (16) can be positioned in a plurality of planes, preferably at different heights, to grind blades (12) in two or more cutting planes.

16. A harvester in accordance with one of the preceding claims, wherein a cleaning unit (30) is interposed before the grinder (14) for cleaning the blades (12) to be ground, wherein the cleaning unit (30) preferably has at least one cleaning element for cleaning an adjacent blade (12) to be ground on the next grinding procedure and/or has a plurality of cleaning elements for cleaning a plurality of blades (12) to be ground and/or has an airflow generator for blowing away or for sucking off contaminants and/or a liquid jet cleaner and/or liquid spray cleaner for hosing and/or spraying off contaminants.

17. A harvester in accordance with one of the preceding claims, wherein the grinder (14) has a cover for covering the grinding tool towards the conveying channel (9) and/or towards a machine section guiding a harvest, wherein the cover preferably comprises a encapsulation (31) which surrounds the grinding tool at least towards a half-space and has an outlet opening for sparks and particles thrown off by the grinding tool which is directed away from the conveying channel (9) to the ground, and is in particular directed downwardly obliquely to the rear, wherein a collection apparatus, in particular as collection tray, is preferably disposed after the named outlet opening, and/or wherein an airflow generator for blowing away or sucking off sparks and particles thrown off by the grinding tool is associated with the grinding tool and/or with the cover associated therewith.

18. A harvester in accordance with one of the preceding claims, wherein the grinding apparatus (13) is formed as a separate assembly which can be docked to a machine frame and/or to a cutting bar via a coupling apparatus preferably including fast-coupling means (32), for example in the form of fast clamps, for grinding the blades (12), and/or wherein the control apparatus (20) for controlling the grinding apparatus (13) is mounted at an assembly belonging to the cutting apparatus (10), preferably at the longitudinal slide (18) or at the cross
slide (17) and participates in the movements of the named assembly of the grinding apparatus.

## Revendications

1. Moissonneuse, notamment sous la forme d'une chargeuse et/ou d'une presse à bottes, avec un dispositif de saisie (6) pour saisir le produit moissonné du sol, un canal de transport (9) raccordé au dispositif de saisie (6), qui aboutit dans un silo à produit moissonné (3) et/ou une chambre de traitement, notamment une chambre de presse (3a), un dispositif de coupe (10) avec plusieurs couteaux (12) pour découper le produit moissonné transporté par un convoyeur (8) à travers le canal de transport (9), ainsi qu'un dispositif d'affûtage (13) pour affûter les couteaux (12), qui comprend au moins un affûteur (14), un guidage d'affûteur (15) ainsi qu'un mécanisme de commande pour l'affûteur (14), à l'aide duquel l'affûteur (14) est mobile sur la lame d'un couteau respectif (12) ainsi que de couteau en couteau, le guidage d'affûteur (15) comportant une traverse latérale (16), sur laquelle un chariot transversal (17) est disposé de manière déplaçable transversalement par rapport au sens de coupe des couteaux (12), sur lequel l'affûteur (14) est disposé de manière déplaçable longitudinalement, **caractérisée en ce que** l'affûteur (14) est fixé sur un chariot longitudinal (18) qui est guidé de manière mobile dans le sens longitudinal et parallèlement à la lame des couteaux (12) sur le chariot transversal (17), et **en ce qu'**un dispositif de serrage (19) est prévu pour serrer l'affûteur (14) au meulage d'un couteau (12) contre le couteau à meuler et transversalement au sens de coupe.

2. Moissonneuse selon la revendication précédente, le dispositif de serrage (19) comprenant un dispositif de fixation pour appliquer une force élastique sur le chariot transversal (17).

3. Moissonneuse selon une quelconque des revendications précédentes, un dispositif de commande (20) étant prévu pour la commande de la force de serrage en fonction d'au moins un paramètre de service du dispositif d'affûtage (13).

4. Moissonneuse selon la revendication précédente, le dispositif de commande (20) présentant des éléments de commande destinés à modifier la force de serrage en fonction de la position de déplacement du chariot longitudinal (18) et/ou des éléments de commande destinés à modifier la force de serrage en fonction d'une vitesse d'outil d'affûtage, notamment d'un régime d'affûteur, d'un couple d'affûteur et/ou d'une pression hydraulique de l'affûteur et/ou des éléments de commande destinés à modifier la force de serrage en fonction d'un état saisi du couteau, notamment d'un tranchant saisi d'un couteau.

5. Moissonneuse selon une quelconque des revendications précédentes, le dispositif de serrage (19) présentant un acteur actionné par moyen de pression, notamment un hydromoteur (21) et/ou un acteur électrique, notamment un moteur électrique, afin de générer la force de serrage.

6. Moissonneuse selon une quelconque des revendications précédentes, l'acteur du dispositif de serrage (19) étant constitué par le mécanisme de commande du chariot transversal (17).

7. Moissonneuse selon une quelconque des revendications précédentes, le dispositif de serrage (19) présentant un tendeur mécanique, comprenant de préférence un dispositif à ressort et un cliquet afin d'appliquer la force de serrage.

8. Moissonneuse selon une quelconque des revendications précédentes, un dispositif d'identification étant prévu pour l'identification de l'absence d'un couteau à affûter et/ou d'une rupture d'un couteau à affûter, le dispositif d'identification présentant une unité de surveillance pour la surveillance de la force de serrage survenant lors de l'affûtage d'un couteau respectif et une unité d'évaluation afin d'identifier l'absence ou la rupture d'un couteau à l'aide de la force de serrage surveillée et/ou un dispositif de saisie optique pour la saisie optique d'une rupture de couteau ou de l'absence d'un couteau.

9. Moissonneuse selon une quelconque des revendications précédentes, la traverse latérale (16) étant montée sur palier mobile sur un plan droit, de sorte que la traverse latérale (16) est déplaçable vers les couteaux (12) et dans la direction s'éloignant de ceux-ci, la traverse latérale (16) étant accrochée de préférence à un guidage de bielle (22), dont les bielles (23, 24) sont montées sur palier pivotant autour d'axes de pivotement parallèlement au sens de déplacement de la traverse latérale (16).

10. Moissonneuse selon une quelconque des revendications précédentes, la traverse latérale (16) présentant un dispositif de positionnement et/ou de maintien de préférence en forme de came, transférable en prise avec les couteaux pour le positionnement et/ou la fixation des couteaux à affûter par rapport à la traverse latérale et/ou inversement celui/celle de la traverse latérale par rapport aux couteaux (12).

11. Moissonneuse selon une quelconque des revendications précédentes, le guidage longitudinale du chariot longitudinal (18) sur le chariot transversal (17) comprenant deux points d'articulation (26, 27) écartés l'un de l'autre, qui sont guidés de manière mobile sur une paire de contours de guidage en forme de coulisse (28, 29), de préférence des rainures de guidage.

12. Moissonneuse selon la revendication précédente, les contours de guidage en forme de coulisse (28, 29) étant disposés pour l'essentiel en position couchée l'un derrière l'autre au même niveau de hauteur pour l'essentiel et/ou en position chevauchante l'un au-dessus de l'autre à des niveaux de hauteur différents dans le sens longitudinal et/ou de manière pénétrant l'un dans l'autre et/ou étant constitués par un contour de guidage continu.

13. Moissonneuse selon une quelconque des revendications 11 ou 12, au moins un des contours de guidage en forme de coulisse (28, 29) présentant au moins une section courbée en arc et une section autrement courbée ou droite raccordée à la section courbée en arc.

14. Moissonneuse selon une quelconque des revendications précédentes, les contours de guidage en forme de coulisse (28, 29) étant agencés sur le chariot longitudinal (18) et les points d'articulation (26, 27) étant prévus à un endroit fixe sur le chariot transversal (17).

15. Moissonneuse selon une quelconque des revendications précédentes, la traverse latérale (16) étant positionnable à plusieurs niveaux, de préférence à plusieurs hauteurs, afin d'affûter les couteaux (12) à deux niveaux de coupe ou plus.

16. Moissonneuse selon une quelconque des revendications précédentes, une unité de nettoyage (30) étant placée en amont de l'affûteur (14) pour le nettoyage des couteaux (12) à affûter, l'unité de nettoyage (30) présentant de préférence au moins un élément de nettoyage pour nettoyer un couteau avoisinant (12) à affûter lors du prochain affûtage et/ou plusieurs éléments de nettoyage pour nettoyer plusieurs couteaux (12) à affûter et/ou présentant un générateur de courant d'air pour souffler ou aspirer des impuretés et/ou un nettoyeur à jet de liquide et/ou vaporisateur pour arroser et/ou vaporiser des impuretés.

17. Moissonneuse selon une quelconque des revendications précédentes, l'affûteur (14) présentant un recouvrement pour recouvrir l'outil d'affûtage vers le canal de transport (9) et/ou vers une section de machine conduisant vers un produit moissonné, le recouvrement comprenant de préférence un blindage (31) qui entoure l'outil d'affûtage au moins vers un espace semi-infini, et présentant un orifice de sortie pour les étincelles et particules projetées par l'outil d'affûtage, qui est dirigé du canal de transport (9) vers le sol, et notamment dirigé en biais vers l'arrière et vers le bas, un dispositif de collecte étant placé de préférence en aval dudit orifice de sortie, notamment une cuvette de collecte et/ou un générateur de courant d'air étant affecté à l'outil d'affûtage et/ou au recouvrement affecté à celui-ci pour souffler et/ou aspirer les étincelles et particules projetées par l'outil d'affûtage.

18. Moissonneuse selon une quelconque des revendications précédentes, le dispositif d'affûtage (13) étant constitué comme module séparé, qui est amarrable à un cadre de machine et/ou à une barre coupante via un dispositif d'accouplement, de préférence comprenant un élément d'accouplement rapide (32), par exemple sous la forme de tendeurs rapides pour affûter les couteaux (12), et est de nouveau désamarrable de celui-ci après l'affûtage et/ou le dispositif de commande (20) étant monté pour la commande du dispositif de meulage (13) sur un module appartenant au dispositif de coupe (10), de préférence sur le chariot longitudinal (18) ou sur le chariot transversal (17) et suivant les mouvements dudit module du dispositif d'affûtage.
